# EUROPEAN PATENT APPLICATION

(11) **EP 0 651 382 A1**
(43) Date of publication of application: **03.05.1995**
(21) Application number: 93203062.0
(22) Date of filing: 02.11.1993
(51) Int. Cl.: G11B 7/24

(54) **Optical storage medium**

(71) Applicant: Akzo Nobel N.V., NL-6824 BM Arnhem (NL)
(72) Inventor: Van Wijk, Robert Jan, NL-6824 KC Arnhem (NL); Möhlmann, Gustaaf Ronald, NL-6952 CL Dieren (NL)
(74) Representative: Schalkwijk, Pieter Cornelis

(57) **Abstract**

Presented is a medium for optical data storage which can be used, e.g., as a microfiche, a microfilm or an optical card and comprises a substrate and a layer including a liquid crystalline polymer and a dye. At its lower end (4) the layer (2) is supported by a substrate (3). The concentration of the dye included in the layer (2) is non-uniform over the thickness (5) of the layer (2), such that the concentration is highest in its lower region (4). In a preferred embodiment, the layer (2) is divided into at least two sublayers (2',2''), with only the lower sublayer including a dye. These media for optical data storage allow an increase in the writing speed and/or a reduction of the required laser power.

## Description

The invention relates to a medium for optical data storage comprising a liquid crystalline polymer (LCP) which comprises a dye.

Optical data storage media are known, both for analog data storage, e.g., microfiches, microfilms, optical cards, and for digital data storage, e.g., compact discs. It is known to employ LCPs in optical data storage, and such media are known to comprise a substrate carrying a layer of the LCP, which layer is recordable by means of a laser. It is also known to include a dye in the LCP layer in order for the energy of the laser to be absorbed efficiently.

In this respect EP-A-0 474 473 discloses a process and apparatus for manufacturing optical storage devices wherein a film of liquid crystal material, such as a liquid crystalline polymer (LCP) is deposited on a substrate. LCP material can be used for thermo-optical and photo-optical storage media. For LCP materials which have a glass transition temperature Tg above ambient, localized heating by a laser beam produces an optically clear written spot or line resulting from rapid cooling of the written material into the glass phase, so that the clear isotropic texture is quenched into the solid glass phase. LCP materials which have a Tg below ambient adopt a scattering texture when locally heated by a laser beam. The LCP material does not require the application thereto of an electric field in order to produce a scattering texture or clear lines or spots, so that it is possible to make a device without electrodes, which results in a simple construction. The object of EP-A-0 474 473 is to provide a process and an apparatus for mass producing such optical storage devices.

The Proceedings of the 4^{th} Brite-EuRam Conference, Seville May 25-27, 1992, include an article by G.R. Möhlmann, "Erasable polymeric media for analog information storage and retrieval (P-2119)." This article relates to a dyed, side chain liquid crystal polymeric, optical storage medium. The recording mechanism of this storage medium is based on diode laser initiated liquid-crystalline-multidomain-to-isotropic (scattering to clear) phase transitions. The temperature required for the nematic to isotropic phase change process at the so-called "clearing temperature (Tc)" is achieved by the conversion of absorbed photon energy (by the dye molecules) into heat. In this article optical storage films are presented which have a substrate of a 100 µm thick polyester film on which a 3-7 µm thick active polymer recording layer was deposited. These films were tested to select the optimal polymer system (absorption, Tg, Tc, dye concentration, etc.) and processing conditions (polymer solution concentration, film layer thickness, coating speed, cooling speed for initialization, etc.). This paper, however, does not disclose which of the numerous variables or combinations of variables mentioned really have an effect on the writing speed.

The aspects of optical data storage media most in need of improvement include the writing speed and/or the laser power used for recording. While the order of magnitude and the absolute values of the writing speed and the laser power may differ widely per specific optical data storage application, it is a common desire to either increase the writing speed or achieve the appropriate writing speed by means of lower laser power. Additionally, the achievement of a higher writing speed and/or a lower laser power should not be attended with adverse effects such as a decrease of information depth (it is desired that, at its centre, a written line extends through the entire LCP layer) or the need for an unviably thin LCP layer.

The problems outlined above call for an improved optical data storage medium. In order to provide such an improved optical storage medium, the invention consists of a medium for optical data storage comprising a layer including a liquid crystalline polymer and a dye, the layer being supported by a substrate at its lower region, characterized in that the concentration of the dye included in the layer is non-uniform over the thickness of the layer, such that the concentration is highest in the lower region of the layer.

It has been found that, as compared with optical storage media in which there is no such non-uniform dye concentration over the LCP layer, a considerably higher writing speed can be achieved for the same laser power. Conversely, in accordance with the invention optical storage at a fixed writing speed is achieved with a considerably lower laser power.

According to one embodiment of the invention, the dye concentration gradually decreases from the lower region of the layer upwards.

Optimal results are attained with a preferred embodiment, in which the layer is divided into at least two sublayers having different dye concentrations. The upper sublayer has a lower dye concentration than the lower sublayer. In this embodiment it is further preferred to have zero dye concentration in the upper layer. It is also preferred for the sublayers to be of equal thickness and for the overall thickness of all sublayers to be 0.1 µm to 10 µm.

The dye concentration is preferably such that in the region close to the substrate, such as the lower sublayer, the absorption coefficient (Lambert-Beer definition) of the dye-containing LCP is about 1-2 µm⁻¹, or even higher. Depending on the dye, such an absorption coefficient can be attained with a concentration of 2-4 wt%.

The dye may be covalently incorporated into the LCP, but it can also be present in the form of a solid solution. In view of the desire to employ inexpensive laser diodes, it is preferred to use an infrared dye, especially one absorbing at a wavelength in the range of from 1000 nm to 780 nm. In this respect squarylium, croconium, azo, and azomethine dyes are preferred.

The optical data storage medium of the present invention can be manufactured using materials and methods known in the art.

The LCP layer is supported by a substrate, an especially suitable substrate being a polyester substrate such as polyethylene terephthalate.

The LCP layer employed has a total thickness in the range of from about 0.1 µm to about 20 µm, preferably from about 0.5 µm to about 10 µm. The layer can be applied onto the substrate in known manner, e.g., by coating a polymer solution onto the substrate, followed by evaporation of the solvent. In the embodiment in which two or more sublayers are employed, the sublayers can simply be applied one on top of the other. In the case of coating from solution, it is preferred that each layer be dried by evaporation of the solvent before a subsequent layer is applied. In the case of dyes that are incorporated into the LCP in the form of a solid solution rather than covalently attached to the polymer, the solvent should be evaporated by means of a heat treatment in order to ensure that the dye does not diffuse into the newly applied layer.

In the case of two or more sublayers, the non-uniformity of the dye concentration can be attained by including a lower concentration of dye in each subsequent layer. A non-uniform dye concentration within a single LCP layer can be achieved as follows: an film comprising an LCP with a high dye concentration, or a film consisting essentially of a dye, is coated onto the substrate. Thereafter, an LCP film having a low dye concentration, or not comprising a dye at all, is coated onto the dye-containing film. While the solvent evaporates, the dye diffuses throughout the entire LCP layer, thus resulting in a gradually decreasing dye concentration from the lower end of the layer (substrate side) to the upper end.

While the positive effect attained with the present invention can be achieved regardless of the type of LCP employed, it is preferred to use side chain LCPs, notably LC polyesters with a stilbene side-chain or LC polyurethanes with a biphenyl or imine side chain. Among the advantages of these LCPs are a relatively simple preparation and reasonable thermal, chemical, and UV stabilities. Suitable LCPs and dyes have been disclosed, int.al., in EP 350 113, EP 478 052, and EP 550 105.

The invention also pertains to a method for storing information which comprises the irradiation of an LCP layer including a dye with a laser beam so as to cause a local phase change in the LCP layer. The laser beam and the dye are being chosen so that the wavelength emitted by the laser is absorbed by the LCP layer and converted into heat. Particularly suitable LCP layers are those which have been initialized for laser recording by being brought into the scattering, anisotropic state. To this end, the entire LCP layer is heated to above its Tc so as to bring it into the isotropic state, and then slowly cooled to below Tg. In the temperature range between Tc and Tg (Tg < Tc), a scattering (multidomain anisotropic) structure is obtained which has an opaque appearance and is preserved below Tg. In such a scattering LCP layer information can be written by means of laser irradiation, the laser energy absorbed by the LCP layer resulting in local transition from the scattering, anisotropic structure to the clear, isotropic state. This local isotropic state is preserved below Tg, being subject to a cooling rate that is too fast for the scattering texture to be formed again (i.e., the isotropic state is frozen in below Tg). The invention is also applicable to other types of LCP layers, e.g., those that have been aligned by means of an external field, such as an electric field, and in which laser writing causes local disordering of the alignment.

The optical storage media substantially described hereinbefore are suitable for both analog and digital data storage, but particularly for use in typical analog data storage devices such as microfiches, microfilms, and optical cards.

The invention will be further described hereinafter with reference to the following Figures and Example. The Figures and the Example should be construed to be explanatory rather than limitative.

### Figures

Figure 1 shows a schematic cross-sectional view of an optical storage medium according to the invention.

Figure 2 shows a further embodiment of the invention.

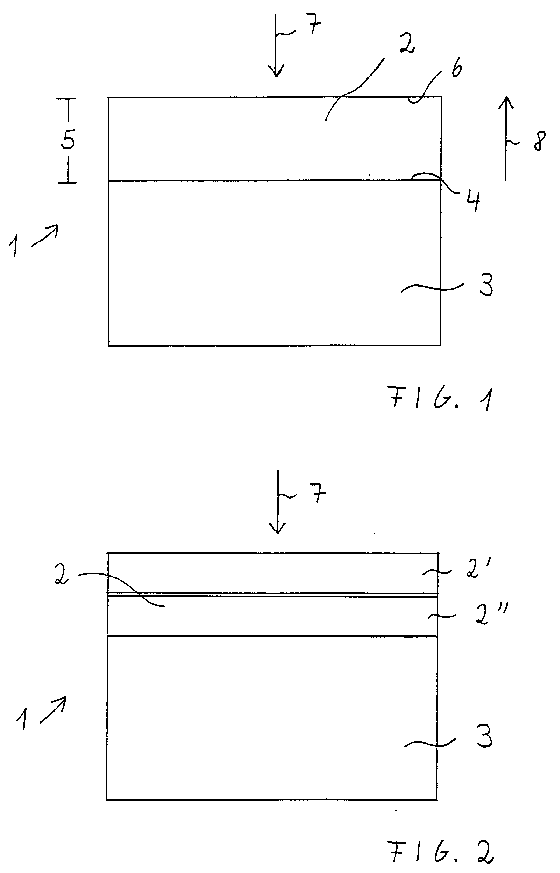

In Figure 1, reference sign (1) marks an optical storage medium according to the invention. A layer (2) including a liquid-crystalline polymer is supported by a substrate (3). The layer (2) further includes a dye for the absorption of the laser light incident along arrow (7), which falls on the upper region (6) of layer (2). The dye concentration over the thickness (5) of layer (2) is non-uniform, the dye concentration gradually decreasing from the lower region (4) to the upper region (6) in the direction of the arrow (8).

Figure 2 shows a preferred embodiment of the invention. The optical storage medium (1) comprises a substrate (3) and a layer (2) including a liquid-crystalline polymer and a dye for absorbing the incident laser light (arrow 7). This embodiment is distinguished from the one shown in Figure 1 by the feature that the layer (2) is divided into two sublayers (2') and (2''). A higher number of sublayers is also possible. According to the invention, the sublayers (2') and (2'') have different dye concentrations, the higher concentration being present in the lower layer (2''). According to this embodiment, it is also possible to provide a gradually decreasing concentration, as mentioned above, from the lower region to the upper region of the layer (2). To obtain this embodiment, the layer (2) will have to be produced in several successive steps to enable the separate production of each sublayer with its own appropriate dye concentration.

### Example

Employed was a medium for optical data storage in accordance with Figure 2, i.e., one in which the LCP layer comprises two sublayers.

The first sublayer, having a thickness of 2.5 µm, was deposited from solution by the so-called meterbar technique onto a polyethylene terephthalate substrate having a thickness of 100 µm. The LCP was a liquid crystalline polyurethane having imine side chains in accordance with EP 550 105, with a Tg of 100°C and a Tc of 169°C. This first sublayer comprised a squarylium dye (solid solution) in a concentration of 2 wt%. After evaporation of the solvent by heat treatment, a subsequent sublayer, comprising the same LCP and having the same thickness of 2.5 µm but not comprising a dye, was applied onto the first sublayer, using the same meterbar technique, and again followed by evaporation of the solvent.

The optical storage medium was heated to above Tc for a few seconds, resulting in an isotropic, non-scattering state. By slow cooling to below Tc a scattering structure was obtained, and the optical storage medium had an opaque appearance, which was preserved below Tg.

Information was written in the storage medium by a GaAs laser operating at 825 nm and having a focus width (Full Width at Half Maximum, FWHM) of 5 µm. Employing a laser power of 75 mW on the LCP layer, a writing speed of 1.6 m/s was obtained.

### Comparative Example

The same LCP and the same dye as in the Example were employed, but now in a single layer. The total thickness, 5 µm, and the total dye concentration, 2 wt%, were the same as in the Example.

Using the same laser, the same focus width of the laser beam, and the same power on the film, a writing experiment was performed, the resulting writing speed being 0.9 m/s.

## Claims

1. A medium for optical data storage (1) comprising a layer (2) including a liquid crystalline polymer and a dye, the layer (2) being supported at its lower end by a substrate (3), characterized in that the concentration of the dye included in the layer (2) is non-uniform over the thickness (5) of the layer (2), such that the concentration is highest in the lower region (4) of the layer (2).

2. A medium for optical data storage according to claim 1, characterized in that the dye concentration gradually decreases from the lower region (4) to an upper region (6) of the layer (2).

3. A medium for optical data storage according to claim 1, characterized in that the concentration of the dye decreases stepwise from the lower region (4) to the upper region (6) of the layer (2).

4. A medium for optical data storage according to any one of the preceding claims, characterized in that the layer (2) has a thickness (5) of 0.1 µm to 10 µm.

5. A medium for optical data storage according to claim 1, characterized in that the layer (2) is divided into at least two sublayers (2', 2'') having different dye concentrations.

6. A medium for optical data storage according to claim 5, characterized in that the layer (2) is divided into two sublayers (2',2''), the upper sublayer (2') having a lower dye concentration than the lower sublayer (2'').

7. A medium for optical data storage according to claim 6, characterized in that the dye concentration in the upper sublayer (2') is zero.

8. A medium for optical data storage according to any one of claims 5 to 7, characterized in that the sublayers (2', 2'') are of equal thickness.

9. A medium for optical data storage according to any one of claims 5 to 8, characterized in that the overall thickness of all sublayers (2',2'') is 0.1 µm to 10 µm.

10. A medium for optical data storage according to any one of claims 1 to 9, characterized in that the dye absorbs within a wavelength range of from 1000 nm to 780 nm.

11. A medium for optical data storage according to claim 10, characterized in that the dye is a squarylium dye, a croconium dye, an azo dye, or an azomethine dye.

12. A medium for optical data storage according to any one of the preceding claims, characterized in that in a region close to the substrate, such as the lower sublayer, the absorption coefficient of the dye-containing LCP is at least about 1 µm⁻¹.

13. A medium for optical data storage according to any one of the preceding claims, characterized in that the LCP is a side chain polyester or polyurethane.

14. A medium for optical data storage according to any one of the preceding claims, characterized in that the substrate is a polyester substrate.

15. The use of a medium for optical data storage according to any one of the preceding claims in analog data storage devices including microfiches, microfilms, and optical cards.
